# EUROPÄISCHE PATENTSCHRIFT

(11) **EP 0 884 560 B1**
(45) Veröffentlichungstag und Bekanntmachung des Hinweises auf die Patenterteilung: **26.10.2005**
(21) Anmeldenummer: 98109672.0
(22) Anmeldetag: 27.05.1998
(51) Int. Cl.: G01B 11/30, G01B 11/24, G01B 11/16, G01M 17/02

(54) **Verfahren und Vorrichtung zum Prüfen von Reifen**
Tyre testing method and device
Procédé et dispositif de contrôle des pneus

(30) Priorität: 10.06.1997 DE 19724463
(43) Veröffentlichungstag der Anmeldung: 16.12.1998
(73) Patentinhaber: Beissbarth GmbH, 80993 München (DE)
(72) Erfinder: Bux, Hermann, 86559 Adelzhausen (DE); Kelm-Kläger, Ronald, 80993 München (DE)
(74) Vertreter: Kirschner, Klaus Dieter

(56) Entgegenhaltungen:
- WO-A-96/10727
- DE-A- 4 231 578
- DE-A- 19 515 949

## Beschreibung

Die Erfindung betrifft ein Reifenprüfverfahren, bei dem vor und nach einer Änderung im Reifendruck mit kohärenter Strahlung jeweils ein Interferogramm einer Reifenoberfläche erzeugt und das Interferogramm in einem Modulo-2π-Bild umgesetzt wird, das seinerseits zu einem Grauwertbild verarbeitet wird, und bei dem aus einem Vergleich der Grauwertbilder die Informationen über vorhandene Defekte des Reifens gewonnen werden, sowie eine Vorrichtung zur Durchführung des Verfahrens.

Aus der DE 42 31 578 A1 ist ein Verfahren zur Ermittlung der Strukturfestigkeit von Reifen bekannt, bei dem der Reifen mit kohärentem Licht beleuchtet wird, die vom Reifen zurückgestreute Strahlung in einem Zweistrahlinterferometer in zwei Teilstrahlen aufgeteilt wird, in dem Zweistrahlinterferometer eine der beiden Teilstrahlungen gegen die andere Teilstrahlung verkippt wird (Shearing), in dem Zweistrahlinterferometer eine der beiden Teilstrahlungen schrittweise phasenverschoben wird, die von dem Prüfobjekt zurückgestreute und in dem Zweistrahlinterferometer in die zwei Teilstrahlungen aufgeteilte und wieder zusammengeführte Strahlung durch die Oberfläche des Reifens abbildende Komponenten mit großer Öffnung einem elektronischen Bildsensorsystem zugeführt wird und die von dem Bildsensorsystem abgegebenen Signale digitalisiert und in einem Bildverarbeitungssystem zu einem Modulo-2π-Bild weiterverarbeitet werden und das Modulo-2π-Bild zu einem Ausgangs-Grauwertbild bestätigt wird.

Gemäß der DE 195 02 073 A1 wird das oben erwähnte Verfahren dadurch weitergebildet, daß das Ausgangs-Grauwertbild in der Weise partiell differenziert wird, daß ein zweites dem Ausgangs-Grauwertbild gleiches Grauwertbild erzeugt wird und dieses gegen das Ausgangs-Grauwertbild in Shearing-Richtung geometrisch verschoben und um einen über den gesamten Bildbereich konstanten Grauwert verändert wird und das so manipulierte Zweit-Grauwertbild von dem Ausgangs-Grauwertbild subtrahiert wird, und damit ein resultierendes Grauwertbild entsteht, an dem gegebenenfalls vorhandene Defekte eines Reifens erkennbar sind.

WO-A-96 / 10 727 beschreibt eine Vorrichtung zum Prüfen des Reifenprofils eines an einem Fahrzeug montierten Reifens. Dabei wird das Fahrzeug auf einen antreibbaren Rollensatz gefahren. Unter dem Rollensatz ist ein optischer Scanner vorgesehen, der das Profil quer zum Reifen abtastet, während der Reifen vom Rottensatz in Drehung versetzt wird.

Wenn man bedenkt, daß Strukturschäden in den Reifen, insbesondere in der Karkasse einschließlich Gürtel, bei PKW-Reifen die Fahrsicherheit des Kraftfahrzeuges wesentlich beeinträchtigen können, ist es wünschenswert, ein Gerät bereitzustellen, welches die Reifenprüfung durchführen kann.

Der Erfindung liegt die Aufgabe zugrunde, eine Reifenprüfverfahren und eine entsprechende Vorrichtung zu schaffen, die eine Serienprüfung der Reifen an einem KfZ, insbesondere im Rahmen einer allgemeinen technischen Überprüfung des KfZs, gestattet.

Zu diesem Zweck sieht das erfindungsgemäße Verfahren vor, daß zur Prüfung eines Reifens am Kraftfahrzeug das Kraftfahrzeug mit dem Rad, das den zu prüfenden Reifen aufweist, auf einen Rollensatz gefahren wird, daß ein Prüfkopf zur Aufnahme der Interferogramme an den Reifen bis auf einen vorgegebenen Abstand herangefahren wird, daß die Überprüfung auf Defekte auf einem ersten Prüfsegment des Reifens vorgenommen wird, daß das Rad durch den Rollensatz um den Betrag eines Prüfsegmentes weitergedreht wird, und daß die beiden letztgenannten Schritt wiederholt werden, bis der gesamte Reifen geprüft ist.

Die Kosten für den Prüfkopf hängen wesentlich von der Fläche ab, die mit einem Meßgang erfaßt werden kann. Daher ist an dem erfindungsgemäßen Verfahren vorteilhaft, daß die Kosten für den Prüfkopf wesentlich dadurch gesenkt werden, daß eine segmentweise Abtastung des Reifens vorgesehen ist, in dem mehrere Prüfsegmente des Reifens nacheinander in das Blickfeld des Prüfkopfes gebracht werden. Es ist daher wünschenswert, den Reifen inkrementartig zu drehen, um die Testsegmente des Reifens nacheinander zu untersuchen beziehungsweise zu bestrahlen. In dem Fall der deutschen Patentveröffentlichung 42 31 578 A1 ist das Rad an einer sich drehenden Welle einer Maschine montiert, die ausschließlich ausgelegt ist für das Reifentestverfahren, wobei der Reifen durch keine äußere Kraft während der Rotation und dem Test belastet oder beeinflußt wird. Da die gewünschte Verformung des Reifens für das Reifentestverfahren gemäß der deutschen Patentveröffentlichung 42 31 578 A1 ebenfalls durch Quetschen des Reifens bewirkt werden kann, könnte man annehmen, daß, wenn der Reifen während der Rotation an einem Walzensatz gequetscht wird, der Wirkung des Quetschens des Reifens und die Wirkung der Veränderung in dem Reifendruck während des Reifentestverfahrens einander beeinflussen würden, mit dem Effekt, daß die Testergebnisse nicht zuverlässig sind. Überraschenderweise sind jedoch die Testergebnisse zuverlässig und reproduzierbar trotz der Tatsache, daß der Reifen auf einem Walzensatz gedreht wird, während das Rad mit dem Reifen nach wie vor an dem Fahrzeug montiert ist. Ferner konnte überraschenderweise festgestellt werden, daß die an dem Reifen durch das Fahrzeug bewirkten Kräfte die Testergebnisse nicht nachteilig beeinflussen.

Eine vorteilhafte Ausgestaltung des Verfahrens ist dadurch gekennzeichnet, daß zwischen dem Weiterdrehen des Rades und der Aktivierung des Prüfkopfes zur Prüfung eines Prüfsegmentes eine Ruhezeit vorgegebener Dauer vorgesehen wird. Damit wird sichergestellt, daß der Reifen sich nach der Weiterdrehung beruhigen kann, was ansonsten das Meßergebnis beeinträchtigen könnte.

Bei einer weiteren vorteilhaften Ausgestaltung der Erfindung wird der Antriebsmotor des Rollensatzes durch einen Rechner über einen Frequenzumrichter betrieben, und insbesondere wird die Weiterdrehung des Rades abgetastet und in den Rechner eingegeben. Damit wird sichergestellt, daß das Rad zuverlässig immer genau um den erforderlichen Betrag weitergedreht werden kann, ohne den Bauaufwand unnötig zu erhöhen.

Gemäß einer weiteren vorteilhaften Ausgestaltung des Verfahrens werden die für die Weiterschaltung des Rollensatzes erforderlichen Größen, beispielsweise die Reifengröße, in den Rechner eingegeben oder aus einer Tabelle im Rechner abgerufen werden. Wenn die Größen in Form einer Tabelle abgelegt werden, kann diese Tabelle durch die Handeingaben laufend ergänzt werden, so daß in vorteilhafter Weise der Aufwand bei dem Einrichten für eine Prüfung immer weniger wird.

Eine vorteilhafte Ausgestaltung des erfindungsgemäßen Verfahrens ist dadurch gekennzeichnet, daß der Meßkopf in X-, Y- und Z-Richtung verfahren wird, um ihn bei unterschiedlichen Reifen in Prüfposition zu bringen. Damit wird das Verfahren flexibel in Bezug auf die Reifentypen, die verarbeitet werden können.

Eine weitere vorteilhafte Ausgestaltung des erfindungsgemäßen Verfahrens ist dadurch gekennzeichnet, daß bei dem Anfahren des Prüfkopfes dessen Abstand zum Reifen überwacht und eine Anzeige gegeben wird, wenn der Prüfkopf den Sollabstand erreicht hat, und daß der Prüfkopf dann arretiert wird. Damit ist eine sichere, schnelle und genaue Einstellung des Prüfkopfes auf den Reifen möglich. Mit diesem Verfahren kann die Veränderung des Reifendruckes während eines gesamten Testzyklus, in welchem die Testsektoren nacheinander gemessen werden, unter minimalem Zeitverlust durchgeführt werden, da die Druckveränderung von einem ersten Testschritt mit dem Enddruck beginnt, der an dem Ende des ersten Testschrittes vorliegt. Desweiteren muß der Reifen nach jeder Quetschwirkung während der Weiterdrehung des Reifens und nach jeder Druckveränderung für eine gewisse Zeit ruhen, so daß die Testergebnisse nicht durch die fortdauernde Bewegungen im Reifen beeinflußt werden, die durch die Druckveränderung bedingt sind. Somit wird die Zeit minimiert, die für solche Ruhe- beziehungsweise Wiederherstellungszeitperioden benötigt wird, wenn die Anzahl an Druckveränderungen während einem Testzyklus auf ein Minimum gebracht wird. Die Anzahl an Ruhezeitperioden würde erhöht werden, wenn der Reifendruck nach jedem Reifentestschritt bezüglich eines spezifischen Abschnittes des Reifens wieder auf Nominaldruck gebracht würde.

Schließlich ist vorteilhaft, wenn zwei Rollensätze für die gleichzeitige Prüfung der Reifen der Vorderräder beziehungsweise der Hinterräder eines Kraftfahrzeuges vorgesehen werden, und insbesondere ist es vorteilhaft, wenn die Rollensätze eines Bremsenprüfstandes verwendet werden, wobei die Antriebssteuerung der Rollensätze des Bremsenprüfstandes so ausgestaltet wird, daß die Rollen um vorgegebene Beträge weiter drehbar sind. Damit wird die Reifenprüfung mit der Bremsenprüfung integriert, was sowohl kostenmäßige als auch preismäßige Vorteile bietet.

Die erfindungsgemäße Reifenprüfvorrichtung weist eine Luftdruckeinrichtung zur Änderung des Reifendrucks sowie einen Prüfkopf und einen Rechner auf, die vor und nach einer Änderung im Luftdruck mit kohärenter Strahlung jeweils ein Interferogramm der Reifenoberfläche erzeugen und das Interferogramm in ein Modulo-2π-Bild umsetzen, das einerseits zu einem Grauwertbild verarbeitet wird, und in denen aus einem Vergleich der Grauwertbilder die Informationen über vorhandene Defekte des Reifens gewonnen werden, und die Vorrichtung ist gekennzeichnet durch wenigstens einen angetriebenen Rollensatz auf den das Kraftfahrzeug mit dem Rad, das den zu prüfenden Reifen aufweist, aufzufahren ist, eine Positionierungseinrichtung für den Prüfkopf, mit der der Prüfkopf zur Aufnahme der Interferogramme an den Reifen bis auf einen vorgegebenen Abstand heranzufahren ist und durch eine Steuereinrichtung für den Rollensatz, um diesen um den Betrag eines Prüfsegmentes weiterzudrehen, wenn die Prüfung des vorhergehenden Prüfsegmentes abgeschlossen ist.

Eine vorteilhafte Weiterbildung der erfindungsgemäßen Vorrichtung ist dadurch gekennzeichnet, daß der Motor über eine Frequenzumrichter betrieben ist, der von einem Rechner steuerbar ist. Dies ist eine insbesondere zuverlässige Weise zur Steuerung des Motors des Bremsprüfstandes, sodaß dieser das Rad während des Reifenprüfverfahren bei einer niedrigen Geschwindigkeit inkrementartig bewegt.

Eine vorteilhafte Weiterbildung der erfindungsgemäßen Vorrichtung ist gekennzeichnet durch eine Abtastwalze, die auf eine inkrementartige Drehung des Reifens anspricht und eine Synchronisation liefert, um ein entsprechendes Signal an den Rechner abzugeben, welcher den Motorantrieb ausschaltet, wenn das Rad inkrementartig um ein weiteres Testsegment gedreht wurde. Durch die Verwendung dieser Anordnung kann eine Rückkopplung bezüglich der inkrementartigen Bewegung des Rades erzeugt werden und sie kann zur exakten Steuerung der inkrementartigen beziehungsweise schrittweisen Bewegung des Rades an dem Bremsenprüfstand verwendet werden.

Eine verteilhafte Weiterbildung der erfindungsgemäßen Vorrichtung ist dadurch gekennzeichnet, daß der Rechner einen Speicher umfaßt, in dem eine Tabelle abgelegt ist, die Größen umfaßt, die für die Weiterdrehung eines Rades in Abhängigkeit von der Größe des Rades erforderlich sind. Der Speicher in dem Rechner sichert, daß möglichst wenig Fachkenntnis nötig ist, um die Maschine zu betreiben.

Eine vorteilhafte Weiterbildung der erfindungsgemäßen Vorrichtung ist dadurch gekennzeichnet, daß die Positioniereinrichtung einen X-Schlitten umfaßt, um den Testkopf in einer Richtung senkrecht zu den Achsen der Walzen zu verschieben, einen Y-Schlitten zum Verschieben des Testkopfes in einer Richtung parallel zu den Achsen der Walzen, sowie einen Z-Schlitten zum Verschieben des Testkopfes senkrecht zu den Achsen der Walzen, und zwar senkrecht zu der Stützfläche bei einem 90°-Winkel bezüglich dem Z-Schlitten. Diese Positioniereinrichtung stellt eine exakte Bewegung des Testkopfes mit Bezug auf den Reifen bereit.

Eine vorteilhafte Weiterbildung der erfindungsgemäßen Vorrichtung ist dadurch gekennzeichnet, daß die Positioniereinrichtung eine Z-Säule und zwei parallele Führungen umfaßt, sowie jeweils zwei Schwenkarme. Diese mechanische Positioniereinrichtung ist einfach zu betätigen und stark genug für die raue Umgebung in Automobilwerkstätten und dergleichen.

Eine vorteilhafte Weiterbildung der erfindungsgemäßen Vorrichtung ist dadurch gekennzeichnet, daß die Positioniereinrichtung arretiert werden kann, wenn der Testkopf die Testposition erreicht hat, um gut definierte Bedingungen während der Messungen sicherzustellen.

Eine vorteilhafte Weiterbildung der erfindungsgemäßen Vorrichtung ist gekennzeichnet durch einen Griff, mittels welchem der Testkopf in eine Testposition gebracht werden kann zum Verbessern der einfachen Handhabung der Vorrichtung.

Eine vorteilhafte Weiterbildung der erfindungsgemäßen Vorrichtung ist gekennzeichnet durch einen Druckknopfschalter, um die Positioniereinrichtung zu arretieren, wobei der Steuerknopf vorzugsweise in der Nähe des Griffes zum einfachen Betrieb angeordnet ist.

Eine vorteilhafte Ausführungsform der erfindungsgemäßen Reifenprüfvorrichtung ist gekennzeichnet durch eine Abstandseinstelleinrichtung zum Einstellen des Abstandes beziehungsweise der Entfernung zwischen dem Testkopf und dem Reifen. Bevorzugt umfaßt die Abstandseinstelleinrichtung zwei schräge beziehungsweise schräggestellte Einstelldioden an dem Ende des Testkopfes, wobei die Strahlen von solchen Dioden sich bei der Testentfernung schneiden. Diese Abstandseinstelleinrichtung ermöglicht eine Einstellung des Abstands durch optische Mittel zu erreichen, ohne den Reifen zu berühren. Die Abstandseinstelleinrichtung kann einfach betrieben werden.

Eine vorteilhafte Ausführungsform der erfindungsgemäßen Reifenprüfvorrichtung ist dadurch gekennzeichnet, daß die Abstands- beziehungsweise Entfernungseinstelleinrichtung einen mechanischen Taster an dem Testkopf umfaßt, welcher Taster beim Erreichen der Testentfernung den Reifen berührt. Diese mechanische Version der Abstandseinstelleinrichtung ist einfach und ausgelegt für die rauhe Umgebung.

Eine vorteilhafte Ausführungsform der erfindungsgemäßen Reifenprüfvorrichtung ist dadurch gekennzeichnet, daß die Abstandseinstelleinrichtung eine Ultraschallbereichssucheinrichtung umfaßt. Diese Abstandseinstelleinrichtung ist eine weitere Einrichtung, welche keine Berührung des Reifens erfordert, was ebenfalls vorteilhaft ist, wenn die zugreifbare Fläche ein gewisses Profil aufweist.

Eine vorteilhafte Ausführungsform der Reifenprüfvorrichtung gemäß der Erfindung ist gekennzeichnet durch ein Ventil, welches sowohl bezüglich der Größe ihrer Öffnung als auch bezüglich der Öffnungszeit eingestellt werden kann. Solch ein Ventil ermöglicht eine schnelle und automatische Einstellung des Reifendruckes unter der Steuerung eines Rechners, welcher lediglich die Größe der Ventilöffnung und die Öffnungszeit des Ventiles steuert. Dies führt ebenfalls zu einem Vorteil angesichts der Minimierung der erforderlichen Zeit zum Durchführen eines kompletten Testzyklus.

Eine vorteilhafte Weiterbildung der erfindungsgemäßen Vorrichtung ist dadurch gekennzeichnet, daß die Luftdruckeinrichtung in den Testkopf integriert ist, um diesen Teil der Vorrichtung zu schützen.

Eine vorteilhafte Weiterbildung der erfindungsgemäßen Reifenprüfvorrichtung ist dadurch gekennzeichnet, daß die Luftdruckeinrichtung zum Steuern des Luftdruckes des Reifens ausgelegt ist, sodaß für jeden Schritt der Reifendruck um eine Stufe beziehungsweise um einen Schritt reduziert wird, wobei nach Beendigung des Testens dieser erneut auf Nominaldruck zurückgebracht wird. Wie bereits oben erwähnt, minimiert dies die erforderliche Zeit zum Durchführen eines kompletten Testverfahrenszyklus.

Eine vorteilhafte Weiterbildung der erfindungsgemäßen Reifenprüfvorrichtung ist gekennzeichnet durch zwei Walzensätze und zwei Positioniereinrichtungen mit Testköpfen. Bevorzugt sind die Positioniereinrichtungen und einen Testkopf umfassenden Einheiten den Walzensätzen einer Bremstestvorrichtung zugeordnet. Dementsprechend wird das Testen des Reifens mit der Bremsprüfung integriert, was vorteilhaft ist, sowohl bezüglich der Kosten als auch bezüglich der Kosten der Ausrüstung.

Eine vorteilhafte Weiterbildung der erfindungsgemäßen Vorrichtung ist gekennzeichnet durch eine zentrale Rechnungseinrichtung zur Steuerung der Funktionen der Reifenprüfvorrichtung, wobei die Rechnungseinrichtung bevorzugt in der Rechnungseinrichtung des Bremsprüfstandes integriert ist. Durch Kombination der Rechnungseinrichtung der Reifenprüfvorrichtung mit der Rechnungseinrichtung des Bremsprüfstandes können einige Einsparungen erzielt werden mit Bezug auf die erforderliche Hardware, wodurch die Kosten reduziert und die Zuverlässigkeit erhöht werden.

Eine vorteilhafte Weiterbildung der erfindungsgemäßen Vorrichtung ist gekennzeichnet durch einen Monitor zur Anzeige der Meßergebnisse, wobei dieser ebenfalls zur Anzeige von Informationen mit Bezug auf Bremstesten dient. Dies ist ein weiteres gemeinsame Nutzung der Hardware, um Kosten zu reduzieren.

Ausführungsbeispiele der Erfindung werden nun anhand der beiliegenden Zeichnungen beschrieben. Es zeigen:
Figur 1 schematisch in Draufsicht eine Reifenprüfvorrichtung gemäß einem ersten Ausführungsbeispiel der Erfindung unter Verwendung der Rollensätze eines Bremsenprüfstandes;
Figur 2 eine zum Teil schematische Seitenansicht der Reifenprüfvorrichtung nach Figur 1;
Figur 3 eine teilweise, schematische Draufsicht auf ein weiteres Ausführungsbeispiel der erfindungsgemäßen Reifenprüfvorrichtung;
Figur 4 eine teilweise, schematische Draufsicht auf ein weiteres Ausführungsbeispiel der erfindungsgemäßen Reifenprüfvorrichtung;
Figur 5 eine schematische Seitenansicht des Ausführungsbeispieles nach Figur 4; und
Figur 6 eine Seitenansicht des Ausführungsbeispieles nach Figur 4.

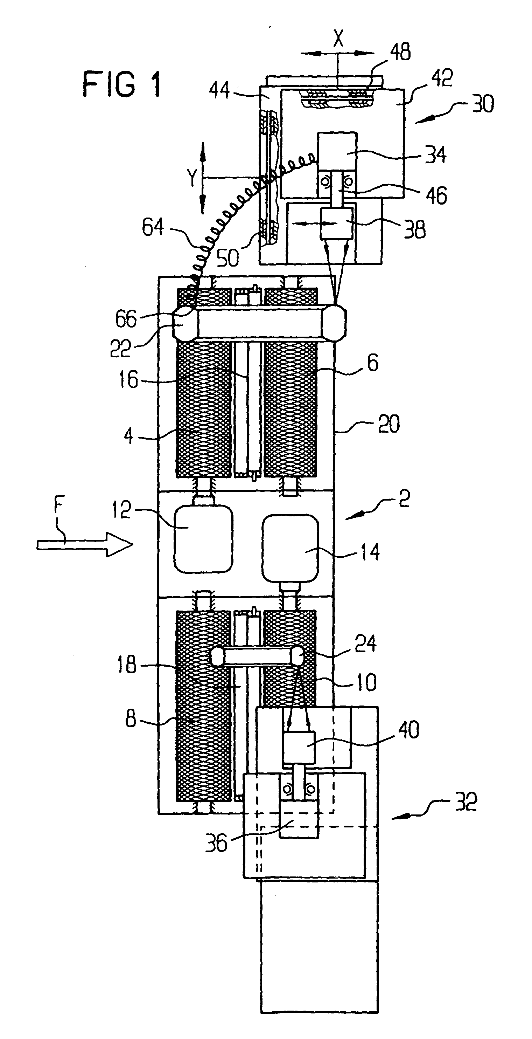

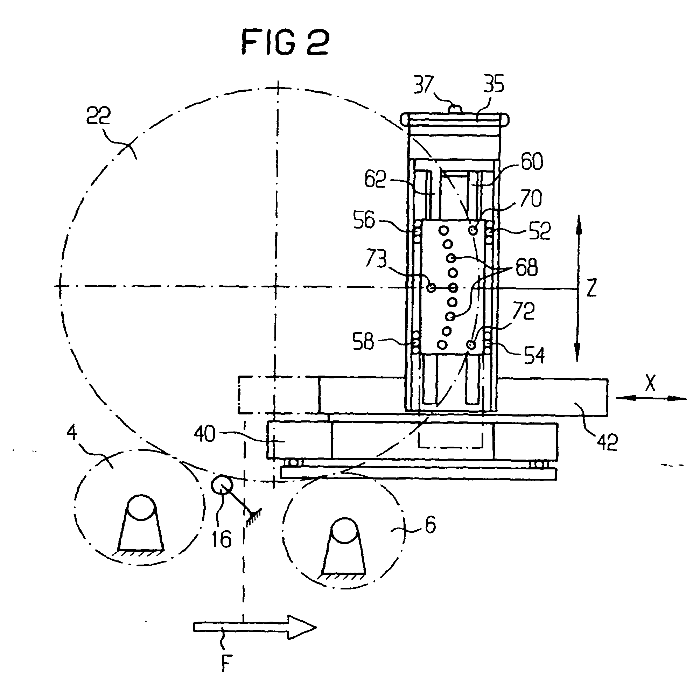

Unter Bezugnahme auf die Figuren 1 und 2 wird nun ein erstes Ausführungsbeispiel der erfindungsgemäßen Reifenprüfvorrichtung beschrieben. Von einem Bremsenprüfstand 2 sind Rollensätze 4, 6 beziehungsweise 8, 10 dargestellt, von denen je eine Rolle 4, 10 jeweils von einem Motor 12, 14 angetrieben ist. Die jeweils andere Rolle 6, 8 ist freilaufend. Zwischen den Rollen 4, 6 beziehungsweise 8, 10 der Rollensätze ist jeweils eine Tastrolle 16 beziehungsweise 18 angeordnet. Die Rollensätze und Antriebsmotoren sind in einer Vertiefung 20 im Boden angeordnet.

Ein Fahrzeug wird in Richtung des Pfeiles F auf die Rollensätze gefahren, so daß beispielsweise seine Vorderräder in den beiden Rollensätzen angeordnet sind. In den Figuren 1 und 2 ist ein Vorderrad 22 eines Kraftfahrzeuges dargestellt, dessen Reifen geprüft werden sollen. In Figur 1 ist desweiteren ein Vorderrad 24 dargestellt, welches einen kleineren Durchmesser als das Rad 22 hat und zu einem anderen Kraftfahrzeug gehört. Die unterschiedlichen Größen der Räder 22 und 24 dienen lediglich zur Erläuterung der Funktionsweise dieses Ausführungsbeispieles der Erfindung.

In Figur 1 sind zwei Positionierungseinrichtungen 30, 32 mit Steuerungseinrichtungen 34, 36 und Prüfköpfen 38, 40 dargestellt. Die Positionierungseinrichtung 30 weist einen X-Schlitten 42, einen Y-Schlitten 44 und einen Z-Schlitten 46 auf. Der Y-Schlitten 44 dient zur Einstellung des Abstandes zwischen dem Prüfkopf 38 und der Seitenfläche des Reifens 22, während der Z-Schlitten 46 es ermöglicht, die Mitte des Prüfkopfes auf die Höhe der Radachse bei unterschiedlich großen Rädern einzustellen. Bei dem gezeigten Ausführungsbeispiel liegt die X-Richtung des X-Schlittens 42 senkrecht zu den Achsen der Rollen 4, 6, die Y-Richtung des Y-Schlittens parallel zu den Achsen der Rollen 4, 6 und der Z-Schlitten senkrecht auf der Achse der Rollen 4, 6, senkrecht zur Aufstandsfläche und unter 90° zu der X-Richtung.

Der X-Schlitten 42 und der Y-Schlitten 44 sind über Linearlager 48 beziehungsweise 50 mit Wellenführungen gelagert, und der Z-Schlitten 46 ist über Linearlager 52, 54, 56, 58 an Führungssäulen 60, 62 gelagert. Der X-Schlitten 42, der Y-Schlitten 44 und der Z-Schlitten 46 sind jeweils mit Klemmeinrichtungen (nicht gezeigt) versehen, die ein Arretieren der Schlitten in einer Prüfposition gestatten, in der der Prüfkopf 38 sich in der Position befindet, in der die Reifenprüfung durchgeführt wird.

Die Steuerungseinrichtung 34 weist die Steuerung für die Luftdruckeinrichtung auf, die einen Druckschlauch 64 und ein Ventil 66 umfaßt, welches auf das Einlaßventil des Reifens aufsetzbar ist. Das Ventil 66 ist sowohl bezüglich seiner Öffnung (Abgabemenge pro Zeiteinheit) als auch zum Öffnen und Schließen steuerbar, so daß die Druckänderung im Reifen sowohl über die Ventilöffnung als auch über die Zeitdauer steuerbar ist, in der Ventil geöffnet ist.

An der Steuerungseinrichtung 34 ist ein Griff 35 vorgesehen, mit dem die Steuerungseinrichtung 34 und der Prüfkopf 38 von Hand entlang der drei Achsen bewegt werden kann, bis die Prüfposition erreicht ist. Wenn die Prüfposition erreicht ist, werden die Arretierungseinrichtungen der drei Schlitten über einen Druckschalter 37 aktiviert, der an dem Griff 35 vorgesehen ist.

Der auf dem Z-Schlitten 46 angeordnete Prüfkopf 38 ist in Figur 2 in Frontansicht dargestellt, und es sind Laserdioden 68 zu erkennen, die zur Erfassung der Interferogramme dienen. Ferner sind zwei Dioden 70, 72 vorgesehen, die dazu dienen, den richtigen Abstand zwischen dem Prüfkopf 38 und der Seitenwand des Reifens 22 festzustellen. Dazu sind die beiden Laserdioden 70, 72 im sichtbaren Bereich derart schräggestellt, daß ihre Laserstrahlen einen Winkel zueinander bilden und sich an der Stelle kreuzen, die dem richtigen Abstand zwischen Prüfkopf und Reifenseitenfläche entspricht. Wenn der Prüfkopf 38 über die Schlitten zu dem Reifen 22 hin bewegt wird, ist der Prüfabstand dann erreicht, wenn die beiden Laserstrahlen auf der Seitenwand des Reifens 22 einen Punkt bilden. Schließlich ist noch ein Objektiv 73 einer Kamera schematisch dargestellt, die die Bilder von dem zu prüfenden Reifen aufnimmt.

Die Drehzahl der Motoren 12, 14 wird über steuerbar Frequenzumrichter (nicht gezeigt) von der zentralen Recheneinheit der Reifenprüfvorrichtung derart gesteuert, daß sie eine relativ geringe, konstante Drehzahl aufweisen. Die Tastrollen 16, 18 tasten den Reifen ab, um über Drehmelder ein Ausgangssignal zu erzeugen, welches dem Betrag entspricht, um den der Reifen gedreht worden ist. Das Ausgangssignal der Drehmelder der Tastrollen 16, 18 wird in dem Rechner dazu verwendet, um den Antriebsmotor abzuschalten, wenn der Reifen um ein Prüfsegment weitergedreht worden ist. Bei dem in Figur 2 gezeigten Ausführungsbeispiel ist ein Prüfsegment 1/8 des Gesamtumfanges des Reifens, so daß der Reifen siebenmal weitergedreht werden muß, um den Reifen insgesamt zu überprüfen.

Mit der Steuerungseinrichtung 34 und dem Prüfkopf 38 sind Zuleitungen für Druckluft (Steuerungseinrichtung 34), für die Stromversorgung des Prüfkopfes und eine Datenleitung zu der Recheneinheit verbunden. Auch die Motoren 12, 14 und die Drehmelder der Tastrollen 16, 18 sind mit der Recheneinheit verbunden, wobei diese Verbindungsleitungen und die Recheneinheit zur Vereinfachung nicht dargestellt sind.

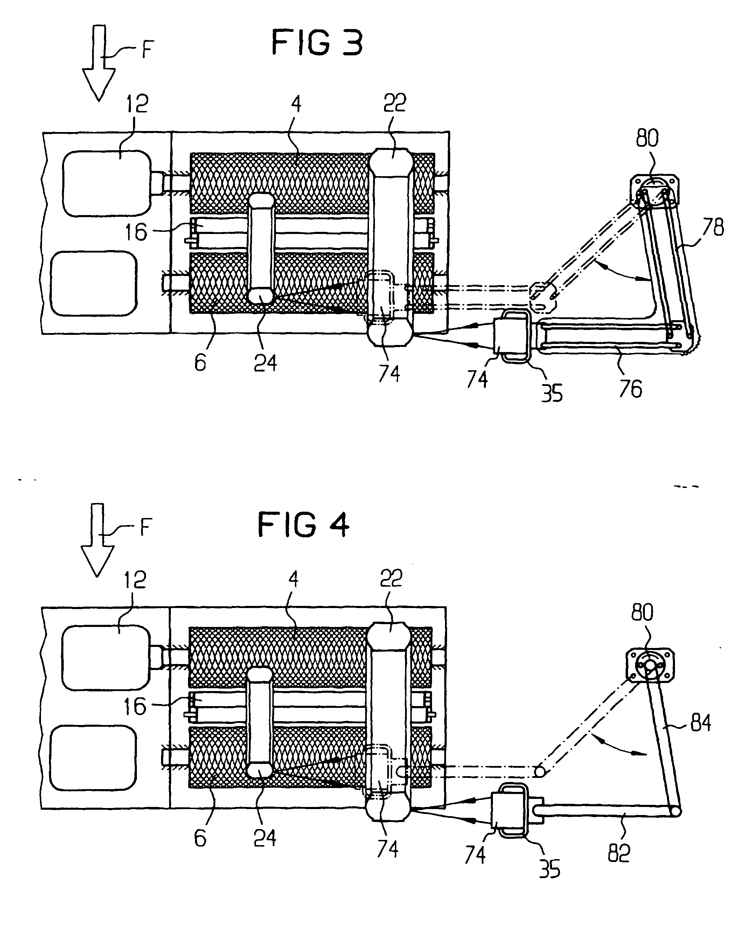

In Figur 3 ist ein weiteres Ausführungsbeispiel der erfindungsgemäßen Reifenprüfvorrichtung dargestellt, wobei gleiche Teile wie in den Figuren 1 und 2 die gleichen Bezugszeichen aufweisen.

Bei diesem Ausführungsbeispiel ist die Steuerungseinrichtung in dem Prüfkopf 74 integriert, und der Prüfkopf ist über zwei Parallelführungen 76, 78 mit einer Z-Säule 80 verbunden. Der Prüfkopf 74 wird mit Hilfe des Handgriffes 35 in Position gebracht, wie oben beschrieben wurde, und dann werden die beiden Parallelführungen 76, 78 sowie die Z-Säule 80 wie bei dem vorhergehenden Ausführungsbeispiel arretiert. Wie aus Figur 3 ersichtlich ist, kann mit dieser Positionierungseinrichtung der Prüfkopf 74 bis auf den Prüfabstand sowohl bei großen Rädern wie dem Rad 22 als auch bei kleinen Rädern wie dem Rad 24, in Position gebracht werden, wie durch Phantomlinien gezeigt ist.

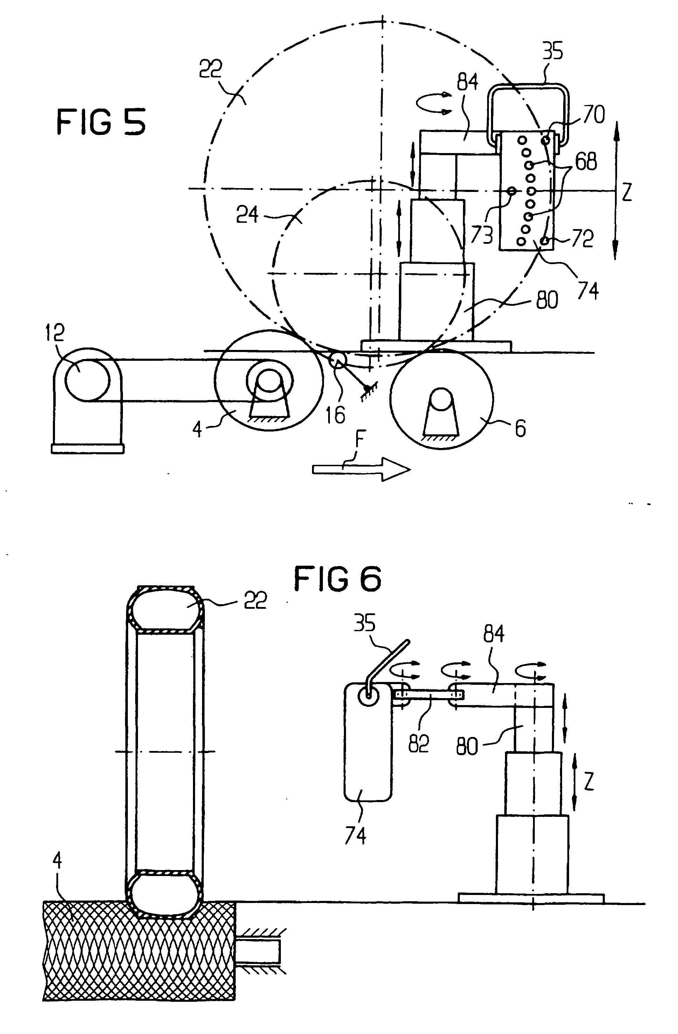

Die Figuren 4 bis 6 zeigen ein weiteres Ausführungsbeispiel der erfindungsgemäßen Reifenprüfvorrichtung, wobei gleiche Teile wie in den vorhergehenden Figuren die gleichen Bezugszeichen tragen. Der Unterschied des Ausführungsbeispieles von Figur 4 zu dem Ausführungsbeispiel von Figur 3 besteht darin, daß statt der Parallelführungen 76, 78 in Figur 3 Schwenkarme 82, 84 eingesetzt werden. Auch damit kann der Prüfkopf 74 leicht in die Position gebracht werden, in der der korrekte Prüfabstand zu den Seitenflächen des Reifens 22 eingehalten wird. Dann werden die Schwenkarme 82, 84 sowie die Z-Säule 80 arretiert.

Bei allen Ausführungsbeispielen ist eine zentrale Recheneinrichtung zur Steuerung der Funktionen der Reifenprüfvorrichtung vorgesehen, wobei diese Recheneinrichtung mit dem Rechner des Bremsenprüfstandes integriert ist, so daß auch hier Hardware-Aufwand eingespart wird. Auch der Monitor zur Anzeige der Meßergebnisse wird für die Bremsenprüfung und für die Reifenprüfung gleichermaßen verwendet, indem die Informationen über die beiden Prüfverfahren auf demselben Monitor angezeigt werden

Die Funktionsweise der oben beschriebenen Ausführungsbeispiele der erfindungsgemäßen Reifenprüfvorrichtung ist wie folgt.

Zunächst wird das Kraftfahrzeug mit den Vorderrädern, die die zu prüfenden Reifen aufweisen, auf die beiden Rollensätze eines Bremsenprüfstandes gefahren, wobei die angetriebenen Rollen unter der Steuerung eines Rechners sowohl zur Durchführung der Bremsenprüfung als auch zur Durchführung der Reifenprüfung mit unterschiedlichen Drehzahlen angetrieben werden können.

Als nächstes wird je ein Prüfkopf zur Aufnahme der Interferogramme an die Reifen bis auf einen vorgegebenen Prüfabstand herangefahren und in dieser Position arretiert.

Nach dem Einfahren des Kraftfahrzeuges auf die Rollensätze werden die Luftdruckventile an den Reifen angeschlossen.

Vor der Durchführung der ersten Prüfsequenz werden die radspezifischen Daten beziehungsweise die für die Weiterschaltung des Rollensatzes erforderlichen Größen, beispielsweise die Dauer des Antriebs bei konstanter Drehzahl, die von den Radabmessungen abhängen, in den Rechner eingegeben beziehungsweise von einer Tabelle abgerufen.

Sodann wird die Reifenprüfung auf einem ersten Prüfsegment des Reifens nach dem eingangs genannten Verfahren durchgeführt. Nachdem das erste Prüfsegment überprüft ist, wird das Rad durch den Rollensatz um den Betrag eines Prüfsegmentes weitergedreht, wobei die angetriebenen Rollen der Rollensätze über einen Rechner und in Abhängigkeit von Ausgangssignalen eines Drehmelders von Tastrollen gesteuert werden. Wenn das Rad mit den nächsten Prüfsegment in Position gebracht ist, wird zunächst einen Ruhezeit abgewartet, um zu verhindern, daß ein Kriechen des Reifens nach dem Weiterdrehen in die Messung beeinflussen könnten, und erst nach dieser Ruhezeit wird nach dem Weiterdrehen des Rades der Prüfkopf aktiviert, um das neue Meßsegment zu überprüfen.

Danach werden so viele Prüfsequenzen und Weiterschaltungen der Räder durchgeführt, bis der gesamte Reifen überprüft ist. Bei jeder Prüfsequenz wird, wie bereits erwähnt, zwischen einer ersten Serie von Interferogrammen und einer zweiten Serie eine Druckabsenkung durchgeführt, die ebenfalls von der Recheneinrichtung gesteuert ist. Die Druckabsenkung erfolgt somit in Stufen, wobei der Druck bei jeder Prüfsequenz um eine Stufe herabgesetzt wird. Nach abgeschlossener Prüfung wird dann der Luftdruck im Reifen wieder auf den Druck gebracht, wobei ebenfalls das Ventil und die angeschlossene Steuereinrichtung benutzt werden.

Nachdem die Prüfung der Vorderräder abgeschlossen ist, wird das Kraftfahrzeug mit den Hinterrädern auf die Rollensätze gefahren und die Prüfprozedur wird an den Hinterrädern wiederholt. Damit ist die Reifenprüfung an allen vier Rädern eines Kraftfahrzeuges abgeschlossen.

Es können Abwandlungen an den Ausführungsbeispielen der Erfindung vorgenommen werden ohne den Rahmen der Erfindung zu verlassen. Beispielsweise können die Positionierungseinrichtungen Wagen mit Rollen aufweisen, mit denen die Prüfköpfe an die Räder herangefahren werden. Die Abstandseinstellung zwischen Prüfkopf und Reifen kann auch auf mechanischem Wege durch einen Taster an dem Prüfkopf, der bei Erreichen des Prüfabstandes an dem Reifen angreift, oder eine Ultraschall-Entfernungsmeßeinrichtung erfolgen. Es ist auch denkbar, daß nur für die Reifenprüfung bestimmte Rollensätze vorgesehen werden, oder daß die Räder der Vorderachse und der Hinterachse gleichzeitig vermessen werden.

## Patentansprüche

1. Reifenprüfverfahren, bei dem vor und nach einer Änderung im Reifendruck mit kohärenter Strahlung jeweils ein Interferogramm der Reifenoberfläche erzeugt und das Interferogramm in ein Modulo-2π-Bild umgesetzt wird, das seinerseits zu einem Grauwertbild verarbeitet wird und bei dem aus einem Vergleich der Grauwertbilder die Informationen über vorhandene Defekte des Reifens gewonnen werden, **dadurch gekennzeichnet, daß** zur Prüfung eines Reifens am Kraftfahrzeug
(a) das Kraftfahrzeug mit dem Rad, das den zu prüfenden Reifen aufweist, auf einen antreibbaren Rollensatz gefahren wird, daß
(b) ein Prüfkopf zur Aufnahme der Interferogramme an den Reifen bis auf einen vorgegebenen Prüfabstand herangefahren wird, daß
(c) auf einem ersten Prüfsegment des Reifens die Überprüfung auf Defekte vorgenommen wird, daß
(d) das Rad durch den Rollensatz um den Betrag eines Prüfsegmentes weitergedreht wird, und daß
(f) die Schritte (c) und (d) wiederholt werden, bis der gesamte Reifen überprüft ist.

2. Verfahren nach Anspruch 1, **dadurch gekennzeichnet, daß** zwischen dem Weiterdrehen des Rades und der Aktivierung des Prüfkopfes zur Prüfung eines Prüfsegmentes eine Ruhezeit vorgegebener Dauer vorgesehen wird.

3. Verfahren nach Anspruch 1, **dadurch gekennzeichnet, daß** der Antriebsmotor des Rollensatzes durch einen Rechner über einen steuerbaren Frequenzumrichter betrieben wird.

4. Verfahren nach Anspruch 3, **dadurch gekennzeichnet, daß** die Weiterdrehung des Motors abgetastet und in den Rechner eingegeben wird.

5. Verfahren nach Anspruch 4, **dadurch gekennzeichnet, daß** die für die Weiterdrehung des Rades erforderlichen Größen , beispielsweise dieReifengröße, in den Rechner eingegeben oder aus einer Tabelle im Rechner abgerufen werden.

6. Verfahren nach Anspruch 1, **dadurch gekennzeichnet, daß** der Meßkopf in X-, Y- und Z-Richtung verfahren wird, um ihn bei unterschiedlichen Reifen in Prüfposition zu bringen.

7. Verfahren nach Anspruch 1, **dadurch gekennzeichnet, daß** beim Anfahren des Prüfkopfes, dessen Abstand zum Reifen überwacht wird, eine Anzeige gegeben wird, wenn der Prüfkopf den Prüfabstand erreicht hat, und daß der Prüfkopf dann arretiert wird.

8. Verfahren nach Anspruch 1, **dadurch gekennzeichnet, daß** der Reifendruck bei jedem Prüfschritt um eine Stufe herabgesetzt und nach abgeschlossener Prüfung wieder auf den Nenndruck gebracht wird.

9. Verfahren nach Anspruch 1, **dadurch gekennzeichnet, daß** zwei Rollensätze für die gleichzeitige Prüfung der Reifen der Vorderräder beziehungsweise der Hinterräder eines Kraftfahrzeuges vorgesehen werden.

10. Verfahren nach einem der vorhergehenden Ansprüche, **dadurch gekennzeichnet, daß** die Rollensätze eines Bremsenprüfstandes verwendet werden, wobei die Antriebssteuerung der Rollensätze des Bremsprüfstandes so ausgestaltet wird, daß die Rollen um vorgegebenen Beträge weiterdrehbar sind.

11. Reifenprüfvorrichtung zur Durchführung des Verfahrens nach Anspruch 1, mit einer Luftdruckeinrichtung zur Änderung des Reifendrucks sowie einem Prüfkopf (38, 40, 74) und einem Rechner, die vor und nach einer Änderung im Luftdruck mit kohärenter Strahlung jeweils ein Interferogramm der Reifenoberfläche erzeugen und das Interferogramm in ein Modulo-2π-Bild umsetzen, das einerseits zu einem Grauwertbild verarbeitet wird, und in denen aus einem Vergleich der Grauwertbilder die Informationen über vorhandene Defekte des Reifens (22, 24) gewonnen werden, **gekennzeichnet durch** wenigstens einen angetriebenen Rollensatz (4,6) auf den das Kraftfahrzeug mit dem Rad, das den zu prüfenden Reifen (22, 24) aufweist, aufzufahren ist, eine Positionierungseinrichtung (30, 32) für den Prüfkopf (38, 40, 74), mit der der Prüfkopf zur Aufnahme der Interferogramme an den Reifen (22, 24) bis auf einen vorgegebenen Abstand heranzufahren ist und **durch** eine Steuereinrichtung für den Rollensatz (4,6), um diesen um den Betrag eines Prüfsegmentes weiterzudrehen, wenn die Prüfung des vorhergehenden Prüfsegmentes abgeschlossen ist.

12. Vorrichtung nach Anspruch 11, **dadurch gekennzeichnet, daß** der Motor (12, 14) zum Antreiben des Rollemsetzes (4, 6) über eine Frequenzumrichter betrieben ist, der von einem Rechner steuerbar ist.

13. Vorrichtung nach Anspruch 12, **dadurch gekennzeichnet, daß** eine Tastrolle (16) vorgesehen ist, die die Weiterdrehung des Reifens (22, 24) abtastet und über einen Drehmelder an den Rechner gibt, der den Motorantrieb abschaltet, wenn der Reifen um ein Prüfsegment weitergedreht ist.

14. Vorrichtung nach Anspruch 13, **dadurch gekennzeichnet, daß** der Rechner einen Speicher aufweist, in dem eine Tabelle abgelegt ist, die Größen umfaßt, die für die Weiterdrehung eines Rades in Abhängigkeit von der Größe des Rades erforderlich sind.

15. Vorrichtung nach einem der Ansprüche 11 bis 14, **dadurch gekennzeichnet, daß** die Positionierungseinrichtung (30, 32) einen X-Schlitten (42) zum Verfahren des Prüfkopfes (38) senkrecht zu den Achsen der Rollen (4, 6), einen Y-Schlitten (44) zum Verfahren des Prüfkopfes (38) parallel zu den Achsen der Rollen (4, 6) und einen Z-Schlitten (46) zum Verfahren des Prüfkopfes (38) senkrecht zu der Achse der Rollen (4, 6) und senkrecht zu der Aufstandsfläche.

16. Vorrichtung nach einem der Ansprüche 11 bis 14, **dadurch gekennzeichnet, daß** die Positionierungseinrichtung (30, 32) eine Z-Säule (80) und zwei Parallelführungen (76, 78) beziehungsweise zwei Schwenkarme (82, 84) aufweist.

17. Vorrichtung nach Anspruch 15 oder 16, **dadurch gekennzeichnet, daß** die Positionierungseinrichtung (30, 32) arretierbar ist, wenn der Prüfkopf (38, 40, 74) die Prüfposition erreicht hat.

18. Vorrichtung nach einem der Ansprüche 15 bis 17, **gekennzeichnet durch** einen Griff (35), mit dem der Prüfkopf (38, 40, 74) in Prüfposition zu bewegen ist.

19. Vorrichtung nach einem der Ansprüche 15 bis 18, **gekennzeichnet durch** einen Steuerknopf (37) für die Auslösung der Arretierung der Positionierungseinrichtung (30, 32), wobei der Steuerknopf (37) vorzugsweise in der Nähe des Griffes (35) angeordnet ist.

20. Vorrichtung nach Anspruch 11, **gekennzeichnet durch** eine Abstands-Einstellvorrichtung, um den Abstand zwischen dem Prüfkopf (38, 40, 74) und dem Reifen (22, 24) einzustellen.

21. Vorrichtung nach Anspruch 20, **dadurch gekennzeichnet, daß** die Abstands-Einstellvorrichtung zwei schräggestellte Dioden (70, 72) an der Stirnseite des Prüfkopfes (38, 40, 74) aufweist, deren Strahlen sich unter dem Prüfabstand schneiden.

22. Vorrichtung nach Anspruch 20, **dadurch gekennzeichnet, daß** die Abstandseinstell-Vorrichtung einen mechanischen Taster an dem Prüfkopf (38, 40, 74) aufweist, der bei Erreichen des Prüfabstandes an dem Reifen angreift.

23. Vorrichtung nach Anspruch 20, **dadurch gekennzeichnet, daß** die Abstandseinstell-Vorrichtung eine Ultraschall-Entfernungsmeßeinrichtung umfaßt.

24. Vorrichtung nach Anspruch 11, **gekennzeichnet durch** ein Ventil (66), das sowohl in Bezug auf die Größe seiner Öffnung als auch in Bezug auf seine Öffnungszeit steuerbar ist.

25. Vorrichtung nach Anspruch 11, **dadurch gekennzeichnet, daß** die Luftdruckeinrichtung in den Prüfkopf (38, 40, 74) integriert ist.

26. Vorrichtung nach Anspruch 11 oder 25, **dadurch gekennzeichnet, daß** die Luftdruckeinrichtung den Luftdruck des Reifens (22, 24) derart steuert, daß der Reifendruck bei jedem Prüfschritt um eine Stufe herabgesetzt und nach abgeschlossener Prüfung wieder auf den Nenndruck gebracht wird.

27. Vorrichtung nach einem der Ansprüche 11 bis 26, **dadurch gekennzeichnet, daß** zwei Rollensätze (4, 6) und zwei Positionierungseinrichtungen (30, 32) mit Prüfköpfen (38, 40, 74) vorgesehen sind.

28. Vorrichtung nach einem der Ansprüche 11 bis 27, **dadurch gekennzeichnet, daß** Einheiten aus Positionierungseinrichtungen (30, 32) und Prüfkopf (38, 40, 74) den Rollensätzen (4, 6) eines Bremsenprüfstandes zugeordnet sind.

29. Vorrichtung nach Anspruch 11, **gekennzeichnet durch** eine zentrale Recheneinrichtung zur Steuerung der Funktionen der Reifenprüfvorrichtung, wobei die Recheneinrichtung vorzugsweise mit der Recheneinrichtung des Bremsenprüfstandes integriert ist.

30. Vorrichtung nach einem der Ansprüche 11 bis 29, **gekennzeichnet durch** einen Monitor zur Anzeige der Meßergebnisse, der auch zur Anzeige der Infomationen bei der Bremsenprüfung dient.

## Claims

1. A method of testing tires, wherein before and after an alteration in the tire pressure a respective interferogram is produced of the tire surface using coherent radiation and the interferogram is converted into a modulo 2π image, which for its part is processed to obtain a gray value image and in the case of which from a comparison of the gray value images information concerning any defects present in the tire is obtained, **characterized in that** for testing the tire on a motor vehicle
(a) the motor vehicle with the wheel mounting the tire to be examined is driven so that such tire is on a drivable roller set
(b) a test head arranged is moved up to the tire to be at a predetermined distance therefrom to produce interferograms,
(c) the checking of the tire for defects is performed on a first test segment of the tire,
(d) the wheel is further rotated by the roller set by an amount equal to a test segment, and
(e) and the steps (c) and (d) are repeated until the entire tire has been examined.

2. The method as claimed in claim 1, **characterized in that** between incremental rotation of the wheel and activation of the test head for testing a test segment a quiescent time of predetermined duration is allowed to elapse.

3. The method as claimed in claim 1, **characterized in that** the drive motor of the roller set is operated using a computer via a controllable frequency converter

4. The method as claimed in claim 3, **characterized in that** the further incremental rotation of the motor is sensed and a corresponding input signal fed to the computer.

5. The method as claimed in claim 4, **characterized in that** the size data, such as the tire size, for further incremental rotation of the wheel are communicated to the computer or are looked up from a table in the computer.

6. The method as claimed in claim 1, **characterized in that** the test head is moved in the X, Y and Z directions in order to bring same into the test position for different sized tires.

7. The method as claimed in claim 1, **characterized in that** when moving said test head toward said tire the distance of which the test head from the tire is monitored, a signal is displayed when the test head has reached the test distance and **in that** the test head is then arrested.

8. The method as claimed in claim 1, **characterized in that** the tire pressure is reduced by one pressure step for each test step and after testing has been completed it is returned to the nominal pressure.

9. The method as claimed in claim 1, **characterized by** two roller sets for the simultaneous testing of the tires of the front and rear wheels of a vehicle.

10. The method as claimed in any one of the preceding claims , **characterized in that** the roller sets of a brake test dynamometer are employed, the drive control for the roller sets of the brake test dynamometer being adapted for the rollers to be incrementally further rotated by predetermined amounts.

11. A tire testing apparatus for the performance of the method as claimed in claim 1, comprising an air pressure means for altering the tire pressure, a test head (38,40,74) and a computer, which before and after an alteration in the air pressure, using coherent radiation, produce a respective interferogram of the tire surface and convert the interferogram into a modulo 2 π image, which for its part is processed to yield a gray value image, and in which on the basis of the gray value images information conceming any defects in the tire (22,24) is obtained, **characterized by** at least a driven roller set (4,6) on which the wheel with the tire (22,24) to be tested thereon may be arranged by driving a vehicle having such wheel, a positioning means (30,32) for the test head (38,40,74), with which the test head is to be moved up to a predetermined distance from the tire (22,24) for producing the interferograms, and by a control means for the roller set (4,6) in order to incrementally rotate the wheel by an amount corresponding to a test segment, when the examination of the preceding test segment is concluded.

12. The apparatus as claimed in claim 11, **characterized in that** the motor (12,14) for driving the roller set (4,6) is adapted to be operated by means of a frequency converter, which is adapted to be controlled by a computer.

13. The apparatus as claimed in claim 12 **characterized by** a feeler roller (16), which is responsive to incremental rotation of the tire (22,24) and via a synchro to supply a corresponding signal to the computer, which switches off the motor drive, when the wheel has been rotated incrementally through one further test segment.

14. The apparatus as claimed in claim 13, **characterized in that** the computer comprises a memory, wherein a table is provided with size data, as is necessary for the incremental rotation of a wheel in a manner dependent on the size of the wheel.

15. The apparatus as claimed in any one of the claims 11 through 14, **characterized in that** the positioning means (30,32)comprises an X-slide (42)for shifting said test head (38) in a direction perpendicular to the axes of the rollers (4,6), a Y-slide (44) for shifting said test head (38) in a direction in parallelism to the axes of the rollers (4,6), and a Z-slide (46) for shifting said test head (38) perpendicularly to the axes of the rollers (4,6) and perpendicularly to the supporting surface.

16. The apparatus as claimed in any one of the claims 11 through 14, **characterized in that** the positioning means (30,32) comprises a Z-column (80) and two parallel guides (76,78) and, respectively, two pivot arms (82,84).

17. The apparatus as claimed in claim 15 or claim 16 **characterized in that** the positioning means (30,32) may be arrested, when the test head (38,40,74) has reached the test position.

18. The apparatus as claimed in any one of the claims 15 through 17, **characterized by** a handle (35) with which the test head (38,40,74) may be brought into a test position.

19. The apparatus as claimed in any one of the claims 15 through 18, **characterized by** press button switch (37) for causing the positioning means (30,32) to be arrested, said control button (37) preferably being arranged in the vicinity of the handle (35).

20. The apparatus as claimed in claim 11, **characterized by** a distance setting device for setting the distance between the test head (38,40,74) and the tire (22,24).

21. The apparatus as claimed in claim 20, **characterized in that** the distance setting device comprises two obliquely set diodes (70,72) on the end of the test head (38,40,74), the beams from such diodes intersecting at the test distance.

22. The apparatus as claimed in claim 20, **characterized in that** the distance setting device comprises a mechanical feeler on the test head (38,40,74), which feeler on reaching the test distance contacts the tire.

23. The apparatus as claimed in claim 20, **characterized in that** the distance setting device comprises an ultrasonic range finding means.

24. The apparatus as claimed in claim 11, **characterized by** valve (66) which is able to be set both as regards the size of its opening and also as regards the time of opening.

25. The apparatus as claimed in claim 11, **characterized in that** the air pressure means is integrated in the test head (38,40,74).

26. The apparatus as claimed in claim 11 or in claim 25, **characterized in that** the air pressure means is adapted to so control the air pressure of the said tire (22,24) that for each test step the tire pressure is reduced by one step and after conclusion of testing is returned to the nominal pressure again.

27. The apparatus as claimed in any one of the claims 11 through 26, **characterized by** two roller sets (4,6) and two positioning means (30,32) with test heads (38,40,74).

28. The apparatus as claimed in any one of the claims 11 through 27, **characterized in that** units comprising positioning means (30,32) and a test head (38,40,74) are associated with the roller sets (4,6) of a brake testing stand.

29. The apparatus as claimed in claim 11, **characterized by** a central computing means for control of the functions of the tire testing apparatus, the computing means preferably being integrated with the computing means of the brake testing stand.

30. The apparatus as claimed in any one of the claims 11 through 29, **characterized by** a monitor for display of the results of measurement, and which also serves for display of information in relation to brake testing.

## Revendications

1. Procédé de vérification du pneu, où on fait un interférogramme de la surface du pneu, tant avant qu'après une modification avec une radiation cohérente de la pression d'air du pneu, interférogramme qui se transpose dans une image modulo - 2n - qui à son tour est transformée dans une image à tons gris, où le gris a différentes intensités, par la comparaison de ces demières images on obtient des informations en ce qui concerne les défauts éventuels du pneu, **caractérisé en ce que**, pour la vérification d'un pneu de véhicule automobile
a) le véhicule automobile qui a le pneu à vérifier est conduit sur un group de galets qui peuvent être actionnés, que
b) un palpeur qui sert pour l'enregistrement des interférogrammes est approché du pneu à vérifier jusqu'à une distance de vérification prescrite, que
c) on fait sur un premier segment de vérification du pneu, la vérification des défauts, que
d) la roue tourne en continuation par le group de galets avec la valeur d'un segment vérifié, et que
e) on répète les pas (c) et (d) tant de fois, jusqu'à ce que toute la roue soit vérifiée.

2. Procédé selon la revendication 1, **caractérisé en ce que**, entre la rotation en continuation de la roue et l'activation du palpeur pour la vérification d'un segment à vérifier, est prévue une pause de durée déterminée.

3. Procédé selon la revendication 1, **caractérisé en ce que**, le moteur d'entraînement du group de galets est actionné par un calculateur à travers un convertisseur de fréquence contrôlable.

4. Procédé selon la revendication 3, **caractérisé en ce que**, la rotation en continuation du moteur est enregistrée et introduite dans le calculateur.

5. Procédé selon la revendication 5, **caractérisé en ce que**, les grandeurs nécessaires pour la rotation en continuation de la roue, par exemple la taille du pneu, sont introduites dans le calculateur ou sont extraites par le calculateur d'un tableau.

6. Procédé selon la revendication 1, **caractérisé en ce que**, le palpeur est actionné sur la direction X, Y et Z pour être amené dans la position de vérification à différents pneus.

7. Procédé selon la revendication 1, **caractérisé en ce qu'**au départ du palpeur, dont la distance au pneu sera contrôlée, un signal sera donné quand le palpeur a atteint la distance à vérifier et que le palpeur sera puis arrêté.

8. Procédé selon la revendication 1, **caractérisé en ce que**, la pression de l'air dans le pneu est réduite à chaque pas de vérification du pneu avec un degré, et après la fin de la vérification sera amenée de nouveau à la pression nominale.

9. Procédé selon la revendication 1, **caractérisé en ce que**, on prévoit deux groups de galets, pour la vérification simultanée des pneus des roues de devant respectivement des roues de derrière du véhicule automobile.

10. Procédé selon l'une des revendications antérieures, **caractérisé en ce qu'**on utilise les groups de galets d'un stand à vérifier les freins, où la commande d'actionnement des groups de galets du stand à vérifier les freins sera modifiée, de sorte que les galets puissent être tournés en continuation avec les valeurs préétablies.

11. Dispositif de vérification de la pression dans les pneus, pour la réalisation du procédé selon la revendication 1, avec une installation d'air comprimé pour la modification de la pression dans les pneus, un palpeur (38, 40, 74) et un calculateur qui crée un interférogramme de la surface du pneu, tant avant qu'après une modification avec une radiation cohérente de la pression de l'air dans le pneu, lequel interférogramme est transposé dans une image modulo -2n, qui à son tour est transposée dans une image à tons gris et où, par la comparaison de ces images dernières, on obtient des informations en ce qui concerne les défauts dans le pneu (22, 24) **caractérisé par** au moins un group de galets entraînés (4, 6) sur lesquels le véhicule automobile est conduit avec la roue où se trouve le pneu à vérifier (22, 24), un dispositif de positionnement (30, 32) pour le palpeur (38, 40, 74) avec lequel dispositif, le palpeur destiné à enregistrer les interférogrammes est amené à une distance prescrite de pneu (22, 24) et par un dispositif de commande pour le group de galets (4, 6) pour tourner en continuation avec la valeur d'un segment à vérifier quand la vérification du segment précédent a été terminée.

12. Dispositif selon la revendication 11, **caractérisé en ce que**, le moteur (12, 14) d'entraînement du group de galets (4, 6) est actionné à travers un convertisseur de fréquence qui peut être commandé par un calculateur.

13. Dispositif selon la revendication 12, **caractérisé en ce qu'**, il est prévu avec un galet de palpation (16) qui fait enregistrer la rotation en continuation du pneu (22, 24) et transmet cette information par l'intermédiaire d'un selsyn au calculateur qui commande l'arrêt de l'actionnement du moteur quand le pneu est toumé en continuation avec encore un segment à vérifier.

14. Dispositif selon la revendication 13, **caractérisé en ce que**, le calculateur est doué avec une mémoire, où est déposé un tableau qui contient les grandeurs nécessaires de rotation en continuation de la roue, en dépendance avec la grandeur de la roue.

15. Dispositif selon l'une des revendications 11 à 14, **caractérisé en ce que**, le dispositif de positionnement (30, 32) est équipé avec un chariot X (42) pour le mouvement du palpeur (38) perpendiculairement sur les axes des galets (4, 6), avec un chariot Y (44) pour le mouvement du palpeur (38) parallèlement avec les axes des rôles (4, 6) et un chariot Z (46) pour le mouvement du palpeur (38) perpendiculairement sur les axes des rôles (4, 6) et perpendiculairement sur la surface horizontale.

16. Dispositif selon l'une des revendications 11 à 14, **caractérisé en ce que**, le dispositif de positionnement (30, 32) présente une colonne Z (80) et deux guidages parallèles (76, 78) respectivement deux bras pivotants (82, 84).

17. Dispositif selon la revendication 15 ou 16, **caractérisé en ce que**, le dispositif de positionnement (30, 32) peut être bloqué quand le palpeur (38, 40, 74) est arrivé dans la position de vérification.

18. Dispositif selon l'une des revendications 15 à 17, **caractérisé par** une poignée (35) à l'aide de laquelle le palpeur (38, 40, 74) est amené dans la position de vérification.

19. Dispositif selon l'une des revendications 15 à 18, **caractérisé par** un bouton de commande (37) pour le déclenchement du blocage du dispositif de positionnement (30, 32) où le bouton de commande (37) est assis spécialement tout près de la poignée (35).

20. Dispositif selon la revendication 11, **caractérisé par** un dispositif de réglage de la distance, pour régler la distance entre palpeur (38, 40, 74) et pneu (22, 24).

21. Dispositif selon la revendication 20, **caractérisé en ce que**, le dispositif de réglage de la distance présente deux diodes (70, 72) assises obliquement sur la partie frontale du palpeur (38, 40, 74) dont les rayons se coupent sous la distance à vérifier.

22. Dispositif selon la revendication 20, **caractérisé en ce que**, le dispositif de réglage de la distance présente sur le palpeur (38, 40, 74) un tâteur mécanique qui à l'atteinte de la distance à vérifier atteint le pneu.

23. Dispositif selon la revendication 20, **caractérisé en ce que**, le dispositif de réglage de la distance comprend un dispositif de mesure de la distance à ultrasons.

24. Dispositif selon la revendication 11, **caractérisé par** une valve (66) qui est contrôlable tant en ce qui concerne son ouverture qu'en ce qui concerne le temps d'ouverture.

25. Dispositif selon la revendication 11, **caractérisé en ce que**, l'installation d'air comprimé est intégrée dans le palpeur (38, 40, 74).

26. Dispositif selon la revendication 11 ou 25, **caractérisé en ce que**, l'installation d'air comprimé contrôle la pression de l'air dans le pneu (22, 24) de sorte qu'à chaque pas de la vérification, la pression est réduite avec un degré et après la fin de la vérification, la pression sera amenée de nouveau à la pression nominale.

27. Dispositif selon l'une des revendications 11 ou 26, **caractérisé en ce qu'**on prévoit deux groups de galets (4, 6) et deux dispositifs de positionnement (30, 32) avec les palpeurs (38, 40, 74).

28. Dispositif selon l'une des revendications 11 ou 27, **caractérisé en ce que**, des unités des dispositifs de positionnement (30, 32) et le palpeur (38, 40, 74) sont incluses dans les groups de galets (4, 6) d'un stand de vérification des freins.

29. Dispositif selon la revendication 11, **caractérisé par** un dispositif de calcul central pour le contrôle des fonctions du dispositif à vérifier les pneus, où le dispositif de calcul est spécialement intégré dans le dispositif de calcul du stand de vérification des freins.

30. Dispositif selon l'une des revendications 11 à 29, **caractérisé par** un moniteur qui sert pour l'affichage des résultats, lequel moniteur sert aussi à l'affichage des informations du stand de vérification des freins.
